(19)

Europäisches Patentamt

European Patent Office

Office européen des brevets

(11) **EP 4 706 806 A1**

(12) **EUROPEAN PATENT APPLICATION**

(43) Date of publication:
**11.03.2026 Bulletin 2026/11**

(21) Application number: **25189502.5**

(22) Date of filing: **15.07.2025**

(51) International Patent Classification (IPC):
***B01D 71/56*** (2006.01)     ***B01D 71/80*** (2006.01)

(52) Cooperative Patent Classification (CPC):
**B01D 71/56; B01D 39/1623; B01D 39/1692;**
**B01D 71/80;** B01D 71/48; B01D 2239/0631;
B01D 2239/0654; B01D 2323/39

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.09.2024 US 202418830187**

(71) Applicant: **Ka Shun NG**
**Ngau Tau Kok, Kowloon (HK)**

(72) Inventors:
• **NG, Ka Shun**
  **Hong Kong (CN)**
• **WONG, Siu Wah**
  **Hong Kong (CN)**
• **CHOI, Tsang Ming Michael**
  **Hong Kong (CN)**
• **WONG, Chun Kit Kendrick**
  **Hong Kong (CN)**
• **CHAU, Sau Yee**
  **Hong Kong (CN)**

(74) Representative: **Ullrich & Naumann PartG mbB**
**Schneidmühlstrasse 21**
**69115 Heidelberg (DE)**

(54) **A METHOD FOR PREPARING A FILTER MEMBRANE AND A FILTER MEMBRANE PREPARED THEREOF**

(57)     The present invention relates to a method for preparing a filter membrane, comprising the following steps: preparing a first solution by dissolving at least polyamide 6 and polyether block amide into formic acid, wherein the weight ratio of polyamide 6 to polyether block amide being limited by 5:1; preparing a second solution by adding acetic acid to the first solution, wherein the weight ratio of acetic acid to formic acid being limited by 3:1, and the weight ratio of polyamide 6 and polyether block amide in the second solution being limited by 15wt%; and electrospinning the second solution, whereby fibers comprising polyamide 6 and polyether block amide being deposited over substrate selected from polyethylene terephthalate. The present invention also relates to a filter membrane prepared by the method.

Figure 1

EP 4 706 806 A1

**Description**

FIELD OF THE INVENTION

The present invention relates to a method for preparing a filter membrane and a filter membrane prepared by the method. In particular, the present invention relates to a method for preparing a filter membrane by using polymeric composite and a filter membrane prepared by the method.

BACKGROUND

Polyamide 6, commonly known as PA6, is a prevalent material used in the preparation of water filter membranes, offering significant technical advantages such as mechanical strength, chemical resistance, toughness, and processability. PA6 membranes show robust mechanical properties that uphold structural integrity under pressure differentials and mechanical stresses, in particular during filtration operation. Its resilience to various contaminants and fluid enhances membrane longevity and performance. The inherent toughness of PA6 allows for extended use and cleaning cycles without substantial degradation. Its industrial processability, such as electrospinning, enables the creation of customized membrane structures to meet precise filtration requirements.

Nevertheless, PA6 does present some drawbacks that may hamper its application in preparing water filter membranes. These include its susceptibility to moisture absorption, limited resistance to UV radiation (the state of art utilize UV lamp for sterilization), potential thermal degradation at high temperatures, and a tendency to warp during processing if adequate cooling and molding conditions are not maintained. These factors can impact the pore size and overall filtration effectiveness of the filter membrane, emphasizing the importance of careful handling and environmental controls during production.

To make up for the drawbacks of PA6, as discussed above, in particular thermal degradation at high temperatures, and a tendency to warp during processing if adequate cooling and molding conditions are not maintained, it may be a viable option to use a composite comprising at least two materials, one of which is PA6, for preparing water filter membranes so as to cater specific filtration needs and desired membrane characteristics.

Employing Polyether Block Amide, commonly known as PEBAX, as a material for preparing the composite for water filter membrane preparation is a viable option, which presents a myriad of advantages that can compensate the drawbacks of PA6. PEBAX's intrinsic flexibility and elasticity render it a standout choice, particularly when the fabricated membranes can withstand deformation or stretching during filtration processes. Its commendable UV and chemical resistance ensure longevity and performance, standing strong against a spectrum of waterborne contaminants. Moreover, PEBAX's low water absorption properties fortify structural integrity and filtration efficacy over time, a crucial attribute in maintaining optimal membrane functionality. Coupled with robust mechanical strength, PEBAX membranes uphold structural integrity amidst pressure differentials and mechanical stresses in filtration systems. The material's customizability allows for tailored membrane characteristics such as pore size, surface chemistry, and permeability, harmonizing with specific filtration requisites. Factor in its thermal stability across diverse temperature ranges and biocompatibility in select applications, and PEBAX emerges as a versatile and reliable material choice for crafting water filter membranes that excel in flexibility, durability, and tailored performance.

The present invention seeks to address issues of these problems by offering a composite comprising PA6 and PEBAX for preparing water filter membranes. Alternatively, the present invention at least provides an alternative to the public.

SUMMARY OF THE INVENTION

The present invention relates to a method for preparing a filter membrane, comprising the following steps: preparing a first solution by dissolving at least polyamide 6 and polyether block amide into formic acid, wherein the weight ratio of polyamide 6 to polyether block amide being limited by 5:1; preparing a second solution by adding acetic acid to the first solution, wherein the weight ratio of acetic acid to formic acid being limited by 3: 1, and the weight ratio of polyamide 6 and polyether block amide in the second solution being limited by 15wt%; and electrospinning the second solution, whereby fibers comprising polyamide 6 and polyether block amide being deposited over substrate selected from polyethylene terephthalate.

In one embodiment, the weight ratio of polyamide 6 to polyether block amide being limited by 4:1.

In one embodiment, the weight ratio of polyamide 6 to polyether block amide being limited by 3:1.

In one embodiment, the weight ratio of polyamide 6 to polyether block amide being limited by 2:1.

In one embodiment, the weight ratio of polyamide 6 to polyether block amide being limited by 1:1.

In one embodiment, the weight ratio of acetic acid to formic acid being limited by 2:1.

In one embodiment, the weight ratio of acetic acid to formic acid being limited by 1:1.

In one embodiment, the weight ratio of polyamide 6 and polyether block amide in the second solution being limited by 12wt%.

In one embodiment, the weight ratio of polyamide 6 and polyether block amide in the second solution being limited by 10wt%.

In one embodiment, the weight ratio of polyamide 6 and polyether block amide in the second solution being limited by 8wt%.

In one embodiment, the method further comprising a step of adding additives selected from aluminum hydroxide oxide, polyhexamethylene biguanide, polyethylenimine, chlorohexidine, or a combination thereof to the second solution, wherein the amount of the additives in the second solution being limited by 5 wt%.

Preferably, the fibers are nanofibers.

The present invention also relates to a filter membrane, comprising: polyamide 6; polyether block amide; and PET substrate; characterized in that, polyamide 6 and polyether block amide being deposited over the PET substrate in a form of fibers by electrospinning, wherein the solution for the electrospinning being prepared by the following steps: preparing a first solution by dissolving polyamide 6 and polyether block amide into formic acid, wherein the weight ratio of polyamide 6 to polyether block amide being limited by 5:1; preparing the solution for the electrospinning by adding acetic acid to the first solution, wherein the weight ratio of acetic acid to formic acid being limited by 3:1, and the weight ratio of polyamide 6 and polyether block amide in the second solution being limited by 15wt%.

In one embodiment, the weight ratio of polyamide 6 to polyether block amide being limited by 4:1.

In one embodiment, the weight ratio of polyamide 6 to polyether block amide being limited by 3:1.

In one embodiment, the weight ratio of polyamide 6 to polyether block amide being limited by 2:1.

In one embodiment, the weight ratio of polyamide 6 to polyether block amide being limited by 1:1.

In one embodiment, the weight ratio of acetic acid to formic acid being limited by 2:1.

In one embodiment, the weight ratio of acetic acid to formic acid being limited by 1:1.

In one embodiment, the weight ratio of polyamide 6 and polyether block amide in the second solution being limited by 12wt%.

In one embodiment, the weight ratio of polyamide 6 and polyether block amide in the second solution being limited by 10wt%.

In one embodiment, the weight ratio of polyamide 6 and polyether block amide in the second solution being limited by 8wt%.

Preferably, the fibers are nanofibers.

More preferably, the membrane can filter out at least 99% of E.coli bacteria.

More preferably, the membrane can filter out at least 99% of particles larger than 3-micron.

BRIEF DESCRIPTION OF THE DRAWINGS

Some embodiments of the present invention will now be explained, with reference to the accompanied drawings, in which:-

Figure 1    is a schematic diagram showing an electrospinning process; and

Figure 2    is a setup for performance test.

DETAILED DESCRIPTION OF PREFERRED EMBODIMENTS OF THE INVENTION

The present invention is now presented by way of examples with reference to the figures in the following paragraphs. Objects, features, and aspects of the present disclosure are disclosed in or are apparent from the following description. It shall be understood by one of ordinary skilled in the art that the following description is a description of exemplary embodiments only, and is not intended as limiting the broader aspects of the present disclosure, which broader aspects are embodied in the exemplary constructions.

It should be noted that, unless otherwise defined, the technical terms or scientific terms used in the embodiments of the present invention shall have the usual meanings understood by person with ordinary skills in the art to which the present invention belongs. "First", "second" and similar expression used in the embodiments of the present invention do not indicate any order, quantity or importance, but are only used to distinguish different components.

Unless otherwise specified, chemicals below are commercially available and used as received without special handling, and may include impurities, such as residual solvents or by-products.

- polyamide 6 (PA6)
- polyether block amide (PEBAX)
- polyethylene terephthalate (PET)

- aluminum hydroxide oxide
- polyhexamethylene biguanide
- polyethylenimine
- chlorohexidine
- acetic acid
- formic acid

Unless otherwise stated, percentages herein refer to weight percentages. To facilitate the explanation of the present invention, the chemicals used in the description are examples only. It shall be understood that it does not have any limiting effect to the present invention.

Preparation of an electrospinning solution

The following contents describe the preparation of an electrospinning solution ready for use for the present invention.
The weight percent (wt%) of polymer, for example PA6, is calculated as below:

$$PA6\, wt\% = \frac{M_{PA6}}{M_{PA6} + M_{PEBAX} + M_{acetic\ acid} + M_{formic\ acid}}$$

where $M$ is the mass of the corresponding chemicals.
For brevity's sake, tables 1-12 below illustrates different electrospinning solutions prepared by different parameters.

Table 1

|             | Example 1 | Example 2 | Example 3 | Example 4 | Example 5 |
|-------------|-----------|-----------|-----------|-----------|-----------|
| PA6         | 50g       | 40g       | 30g       | 20g       | 10g       |
| PEBAX       | 10g       | 10g       | 10g       | 10g       | 10g       |
| Acetic Acid | 517.5g    | 431.25g   | 345g      | 258.75g   | 172.5g    |
| Formic Acid | 172.5g    | 143.75g   | 115g      | 86.25g    | 57.5g     |
| Solution    | 750g      | 625g      | 500g      | 375g      | 250g      |
| Additive(s) | 0%        | 0%        | 0%        | 0%        | 0%        |
| wt%         | 8%        | 8%        | 8%        | 8%        | 8%        |

Table 2

|             | Example 1 | Example 2 | Example 3 | Example 4 | Example 5 |
|-------------|-----------|-----------|-----------|-----------|-----------|
| PA6         | 50g       | 40g       | 30g       | 20g       | 10g       |
| PEBAX       | 10g       | 10g       | 10g       | 10g       | 10g       |
| Acetic Acid | 460g      | 383.33g   | 306.67g   | 230g      | 153.33g   |
| Formic Acid | 230g      | 191.67g   | 153.33g   | 115g      | 76.67g    |
| Solution    | 750g      | 625g      | 500g      | 375g      | 250g      |
| Additive(s) | 0%        | 0%        | 0%        | 0%        | 0%        |
| wt%         | 8%        | 8%        | 8%        | 8%        | 8%        |

Table 3

|       | Example 1 | Example 2 | Example 3 | Example 4 | Example 5 |
|-------|-----------|-----------|-----------|-----------|-----------|
| PA6   | 50g       | 40g       | 30g       | 20g       | 10g       |
| PEBAX | 10g       | 10g       | 10g       | 10g       | 10g       |

(continued)

|  | Example 1 | Example 2 | Example 3 | Example 4 | Example 5 |
|---|---|---|---|---|---|
| Acetic Acid | 345g | 287.5g | 230g | 172.5g | 115g |
| Formic Acid | 345g | 287.5g | 230g | 172.5g | 115g |
| Solution | 750g | 625g | 500g | 375g | 250g |
| Additive(s) | 0% | 0% | 0% | 0% | 0% |
| wt% | 8% | 8% | 8% | 8% | 8% |

Table 4

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 405g | 337.5g | 270g | 202.5g | 135g |
| Formic Acid | 135g | 112.5g | 90g | 67.5g | 45g |
| Solution | 600g | 500g | 400g | 300g | 200g |
| Additive(s) | 0% | 0% | 0% | 0% | 0% |
| wt% | 10% | 10% | 10% | 10% | 10% |

Table 5

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 360g | 300g | 240g | 180g | 120g |
| Formic Acid | 180g | 150g | 120g | 90g | 60g |
| Solution | 600g | 500g | 400g | 300g | 200g |
| Additive(s) | 0% | 0% | 0% | 0% | 0% |
| wt% | 10% | 10% | 10% | 10% | 10% |

Table 6

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 270g | 225g | 180g | 135g | 90g |
| Formic Acid | 270g | 225g | 180g | 135g | 90g |
| Solution | 600g | 500g | 400g | 300g | 200g |
| Additive(s) | 0% | 0% | 0% | 0% | 0% |
| wt% | 10% | 10% | 10% | 10% | 10% |

Table 7

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |

(continued)

|  | Example 1 | Example 2 | Example 3 | Example 4 | Example 5 |
|---|---|---|---|---|---|
| Acetic Acid | 330g | 275g | 220g | 165g | 110g |
| Formic Acid | 110g | 91.67g | 73.33g | 55g | 36.67g |
| Solution | 500g | 416.67g | 333.33g | 250g | 166.67g |
| Additive(s) | 0% | 0% | 0% | 0% | 0% |
| wt% | 12% | 12% | 12% | 12% | 12% |

Table 8

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 293.33g | 244.44g | 195.56g | 146.67g | 97.78g |
| Formic Acid | 146.67g | 122.22g | 97.78g | 73.33g | 48.89g |
| Solution | 500g | 416.67g | 333.33g | 250g | 166.67g |
| Additive(s) | 0% | 0% | 0% | 0% | 0% |
| wt% | 12% | 12% | 12% | 12% | 12% |

Table 9

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 220g | 183.33g | 146.67g | 110g | 73.33g |
| Formic Acid | 220g | 183.33g | 146.67g | 110g | 73.33g |
| Solution | 500g | 416.67g | 333.33g | 250g | 166.67g |
| Additive(s) | 0% | 0% | 0% | 0% | 0% |
| wt% | 12% | 12% | 12% | 12% | 12% |

Table 10

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 255g | 212.5g | 170g | 127.5g | 85g |
| Formic Acid | 85g | 70.83g | 56.67g | 42.5g | 28.33g |
| Solution | 400g | 333.33g | 266.67g | 200g | 133.33g |
| Additive(s) | 0% | 0% | 0% | 0% | 0% |
| wt% | 15% | 15% | 15% | 15% | 15% |

Table 11

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |

(continued)

|  | Example 1 | Example 2 | Example 3 | Example 4 | Example 5 |
|---|---|---|---|---|---|
| Acetic Acid | 226.67g | 188.89g | 151.11g | 113.33g | 75.56g |
| Formic Acid | 113.33g | 94.44g | 75.56g | 56.67g | 37.78g |
| Solution | 400g | 333.33g | 266.67g | 200g | 133.33g |
| Additive(s) | 0% | 0% | 0% | 0% | 0% |
| wt% | 15% | 15% | 15% | 15% | 15% |

Table 12

|  | Example 1 | Example 2 | Example 3 | Example 4 | Example 5 |
|---|---|---|---|---|---|
| PA6 | 50g | 40g | 30g | 20g | 10g |
| PEBAX | 10g | 10g | 10g | 10g | 10g |
| Acetic Acid | 170g | 141.67g | 113.33g | 85g | 56.67 |
| Formic Acid | 170g | 141.67g | 113.33g | 85g | 56.67 |
| Solution | 400g | 333.33g | 266.67g | 200g | 133.33g |
| Additive(s) | 0% | 0% | 0% | 0% | 0% |
| wt% | 15% | 15% | 15% | 15% | 15% |

Example 1

Here is a detailed description of the steps involved in preparing the electrospinning solution as described in Example 1 of Table 1:
Begin by weighing out 50g of PA6 and 10g of PEBAX. In a mixing container, combine these polymers with 172.5g of formic acid, stirring thoroughly until complete dissolution is achieved. Next, in a separate container, measure out 517.5g of acetic acid. Transfer the formic acid solution containing the dissolved PA6 and PEBAX into the acetic acid, and mix the components until a homogeneous solution is formed. Check the solution for uniformity and ensure that all components are fully dissolved. Confirm that the total weight of the electrospinning solution amounts to 750g. Store the prepared solution appropriately, labeling it with its contents and any relevant safety information. This solution can then be used for electrospinning applications as required, following the appropriate procedures for the electrospinning process.

Example 2

Here is a detailed description of the steps involved in preparing the electrospinning solution as described in Example 2 of Table 1:
Begin by weighing out 40g of PA6 and 10g of PEBAX. In a mixing container, combine these polymers with 143.75g of formic acid, stirring thoroughly until complete dissolution is achieved. Next, in a separate container, measure out 431.25g of acetic acid. Transfer the formic acid solution containing the dissolved PA6 and PEBAX into the acetic acid, and mix the components until a homogeneous solution is formed. Check the solution for uniformity and ensure that all components are fully dissolved. Confirm that the total weight of the electrospinning solution amounts to 625g. Store the prepared solution appropriately, labeling it with its contents and any relevant safety information. This solution can then be used for electrospinning applications as required, following the appropriate procedures for the electrospinning process.

Example 3

Here is a detailed description of the steps involved in preparing the electrospinning solution as described in Example 3 of Table 1:
Begin by weighing out 30g of PA6 and 10g of PEBAX. In a mixing container, combine these polymers with 115g of formic acid, stirring thoroughly until complete dissolution is achieved. Next, in a separate container, measure out 345g of acetic acid. Transfer the formic acid solution containing the dissolved PA6 and PEBAX into the acetic acid, and mix the components until a homogeneous solution is formed. Check the solution for uniformity and ensure that all components are fully dissolved. Confirm that the total weight of the electrospinning solution amounts to 500g. Store the prepared solution appropriately, labeling it with its contents and any relevant safety information. This solution can then be used for electrospinning applications as required, following the appropriate procedures for the electrospinning process.

Example 4

Here is a detailed description of the steps involved in preparing the electrospinning solution as described in Example 4 of Table 1:
Begin by weighing out 20g of PA6 and 10g of PEBAX. In a mixing container, combine these polymers with 86.25g of formic acid, stirring thoroughly until complete dissolution is achieved. Next, in a separate container, measure out 258.75g of acetic acid. Transfer the formic acid solution containing the dissolved PA6 and PEBAX into the acetic acid, and mix the components until a homogeneous solution is formed. Check the solution for uniformity and ensure that all components are fully dissolved. Confirm that the total weight of the electrospinning solution amounts to 375g. Store the prepared solution appropriately, labeling it with its contents and any relevant safety information. This solution can then be used for electrospinning applications as required, following the appropriate procedures for the electrospinning process.

Example 5

Here is a detailed description of the steps involved in preparing the electrospinning solution as described in Example 5 of Table 1:
Begin by weighing out 10g of PA6 and 10g of PEBAX. In a mixing container, combine these polymers with 57.5g of formic acid, stirring thoroughly until complete dissolution is achieved. Next, in a separate container, measure out 172.5g of acetic acid. Transfer the formic acid solution containing the dissolved PA6 and PEBAX into the acetic acid, and mix the components until a homogeneous solution is formed. Check the solution for uniformity and ensure that all components are fully dissolved. Confirm that the total weight of the electrospinning solution amounts to 250g. Store the prepared solution appropriately, labeling it with its contents and any relevant safety information. This solution can then be used for electrospinning applications as required, following the appropriate procedures for the electrospinning process.

To provide additional function for the filter membrane, additives can be added into the electrospinning solution before the electrospinning process. These additives can be selected from aluminum hydroxide oxide, polyhexamethylene biguanide, polyethylenimine, chlorohexidine, or a combination thereof. The amount of the additives in the electrospinning solution being limited by 5 wt%.

Aluminum hydroxide oxide, polyhexamethylene biguanide, polyethylenimine, and chlorhexidine have various roles and properties that can be beneficial in filter membranes, especially in water filtration systems. Aluminum hydroxide oxide is used in filter membranes for its adsorptive properties. It can help in removing certain heavy metals and other contaminants from water due to its ability to bind to these substances. Polyhexamethylene Biguanide is a polymer that is known for its antimicrobial properties. In filter membranes, it can help inhibit the growth of bacteria and other microorganisms, thus preventing biofouling and ensuring the longevity and effectiveness of the filter. Polyethylenimine is a polymer that can be used in filter membranes to improve the filtration efficiency. It can help in the removal of fine particles and impurities from water by adsorption or other mechanisms. Chlorhexidine is an antiseptic and disinfectant commonly used in healthcare settings. In filter membranes, it can be used to prevent the growth of bacteria and algae, thus maintaining the cleanliness and hygiene of the filtration system. Overall, these substances can play important roles in enhancing the performance, durability, and hygiene of filter membranes, particularly in water treatment and purification processes. It is important to note that the specific use and effectiveness of these substances in filter membranes can vary depending on the design of the membrane, the target contaminants, and the intended application.

Electrospinning process for preparing filter membrane

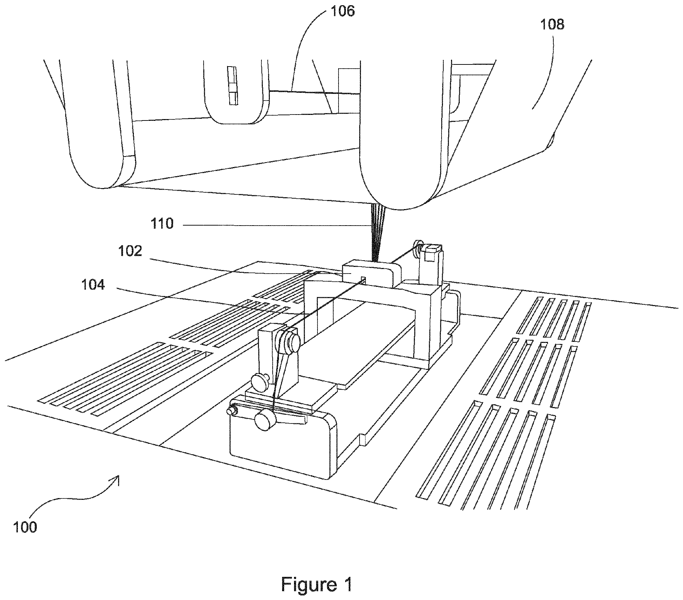

Electrospinning solution, as prepared according to tables 1-12 above, is subject to electrospinning for preparing filter membrane, as illustrated in figure 1. The processing art of electrospinning used in the present disclosure is the state of art, thus detailed description will not be provided for brevity's sake. In brief, in the presented embodiments herein, an electrospinning apparatus 100 is equipped with a carriage 102 housing an electrospinning needle (not shown in figure 1) connected to the electrospinning solution. This apparatus 100 features a lower wire 104 connected to a first electrical potential and an upper wire 106 connected to a second electrical potential opposite to the first potential. The discrepancy in electrical potentials between the lower and upper wires establishes an electric field gradient across the non-woven PET substrate 108 and the electrospinning needle, whereby the electric filed gradient guides the electrospun fibers 110 towards the substrate 108. The continuous electrospinning process deposits polymer nanofibers onto the PET substrate, forming a mat over the PET substrate. Processing parameters for the electrospinning, for examples, are as below:

- Orifices size 0.6-1.0mm (control the flow rate of the polymer solution on the lower wire)

- CE Voltage -40 to -10 kV (lower wire voltage)
- SE Voltage: 10-80kV (upper wire voltage)
- CE to Substrate distance: 30 to 130mm (lower wire to substrate distance)
- SE to Substrate distance: 150-250mm (upper wire to substrate distance)
- Chamber Temperature: 18-30C
- Chamber Humidity: 10-50%
- Substrate tension control: 40-110N (sketch force for substrate)
- Running line speed: 1-40m/min (substrate is moving across to the wire)

Experimentation and optimization of the process parameters can be adjusted for the desired fiber morphology and alignment. For example, to cater the need for filtration, at least one layer, preferably 7 layers or 8 layers, of deposited nanofiber over substrate is possible.

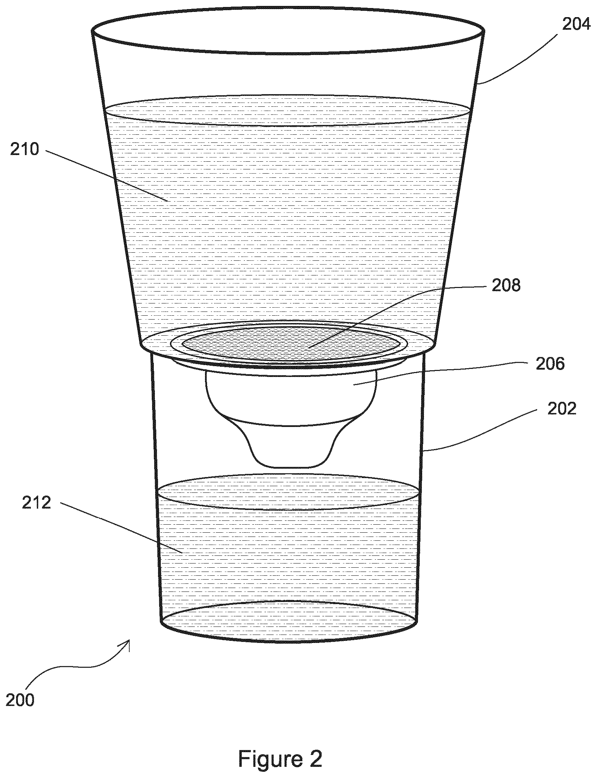

The filter membrane prepared by the aforementioned electrospinning process is subject to performance tests, as illustrate in figure 2. The 3-micron microspheres reduction test and the bacteria (E.coli MTCC 68) reduction test are performed. The membrane used in the following tests comprises PA6 and PABEX in a weight ratio 3:1.

Figure 2 illustrates a set-up 200 that comprises a bottom receptacle 202, a filter receptacle 204 assembled over the bottom receptacle 204, and a filter 206 comprising a filter membrane 208. As seen, the filter 206 is positioned between the bottom receptacle 202 and the filter receptacle 204. The test begins by first pouring 2 liters of distilled water into the filter receptable 204 for flushing. After that, then pouring 10 liters of sample liquid 210 into the filter receptable 204 for filtration. The liquid passes through the filter 206 by gravity. The filtered sample liquid, i.e., filtered liquid 212 is collected in the bottom receptacle 202 and then analyzed.

Analysis 1 - the 3-micron microspheres reduction test result

The aim of the experiment was to evaluate the 3-micron microspheres reduction capability of the gravity filter cartridge. The test conditions and the test results are summarized in table 13.

Table 13. The 3-micron microspheres reduction test result

| Test conditions | Flushing: 2 Liters<br>Sampling: 10 Liters<br>Flow rate: 160 ml/min |
|---|---|
| Sample liquid concentration cfu / 100ml | $5.1 \times 10^4$ |
| Filtered liquid concentration cfu / 100ml | 20 |
| % reduction | 99.9 |
| Log reduction | 3.4 |

Analysis 2 - the bacteria (E.coli MTCC 68) reduction test result

The aim of the experiment was to evaluate the bacteria reduction capability of the gravity filter cartridge. The test conditions and the test results are summarized in table 14.

Table 14. The bacteria (E.coli MTCC 68) reduction test result

| Test conditions | Flushing: 2 Liters<br>Sampling: 10 Liters<br>Flow rate: 170 ml/min |
|---|---|
| Sample liquid concentration cfu / 100ml | $5 \times 10^6$ |
| Filtered liquid concentration cfu / 100ml | 32 |
| % reduction | 99.9993 |
| Log reduction | 5.19 |

The test results show that the membrane can filter out at least 99% of E.coli bacteria and that can filter out at least 99% of particles larger than 3-micron.

The description of the above embodiments is only used to help understanding the method and core idea of the present invention. For those of ordinary skill in the art, without departing from the principle of the present invention, several improvements and modifications can be made to the present invention, and these improvements and modifications also fall within the protection scope of the claims of the present invention. Various modifications to these embodiments are obvious to those skilled in the art, and the general principles defined herein can be implemented in other embodiments without departing from the spirit or scope of the present invention. Therefore, the present invention will not be limited to the embodiments shown in this document but should conform to the widest scope consistent with the principles and novel features disclosed in this document and their equivalents. It should be understood that, each specific numerical point of the parameters described in the context of the embodiments can be used as the end value of the numerical range of the said parameter in the embodiments of the present invention. In other words, said end value is also included in the numerical range. It should be understood that in embodiments according to the present invention, each numerical value within the said numerical range can also be the end value of another numerical range of the said parameter.

**Claims**

1. A method for preparing a filter membrane, comprising the following steps:

   i) preparing a first solution by dissolving at least polyamide 6 and polyether block amide into formic acid, wherein the weight ratio of polyamide 6 to polyether block amide being limited by 5:1;
   ii) preparing a second solution by adding acetic acid to the first solution, wherein the weight ratio of acetic acid to formic acid being limited by 3:1, and the weight ratio of polyamide 6 and polyether block amide in the second solution being limited by 15wt%; and
   iii) electrospinning the second solution, whereby fibers comprising polyamide 6 and polyether block amide being deposited over substrate selected from polyethylene terephthalate.

2. The method as claimed in claim 1, wherein the weight ratio of polyamide 6 to polyether block amide being limited by 3:1.

3. The method as claimed in claim 1, wherein the weight ratio of polyamide 6 to polyether block amide being limited by 1:1.

4. The method as claimed in claim 1, wherein the weight ratio of acetic acid to formic acid being limited by 2:1.

5. The method as claimed in claim 1, wherein the weight ratio of acetic acid to formic acid being limited by 1:1.

6. The method as claimed in claim 1, wherein the weight ratio of polyamide 6 and polyether block amide in the second solution being limited by 12wt%.

7. The method as claimed in claim 1, wherein the weight ratio of polyamide 6 and polyether block amide in the second solution being limited by 10wt%.

8. The method as claimed in claim 1, wherein the weight ratio of polyamide 6 and polyether block amide in the second solution being limited by 8wt%.

9. The method as claimed in claim 1, wherein the method further comprising a step of adding additives selected from aluminum hydroxide oxide, polyhexamethylene biguanide, polyethylenimine, chlorohexidine, or a combination thereof to the second solution, wherein the amount of the additives in the second solution being limited by 5 wt%.

10. The method as claimed in claim 1, wherein the fibers are nanofibers.

11. A filter membrane, comprising:

    • polyamide 6;
    • polyether block amide; and
    • PET substrate;

    **characterized in that**, polyamide 6 and polyether block amide being deposited over the PET substrate in a form of fibers by electrospinning, wherein the solution for the electrospinning being prepared by the following steps:

- preparing a first solution by dissolving polyamide 6 and polyether block amide into formic acid, wherein the weight ratio of polyamide 6 to polyether block amide being limited by 5:1, preferably by 3:1, more preferably by 1:1;
- preparing the solution for the electrospinning by adding acetic acid to the first solution, wherein the weight ratio of acetic acid to formic acid being limited by 3:1, preferably by 2:1, more preferably by 1:1, and the weight ratio of polyamide 6 and polyether block amide in the second solution being limited by 15wt%, preferably by 12wt%, more preferably by 8wt%.

12. The filter membrane as claimed in claim 11, wherein the fibers are nanofibers.

13. The filter membrane as claimed in claim 11, the membrane can filter out at least 99% of E.coli bacteria.

14. The filter membrane as claimed in claim 11, the membrane can filter out at least 99% of particles larger than 3-micron.

Figure 1

Figure 2

Europäisches
Patentamt

European
Patent Office

Office européen
des brevets

# EUROPEAN SEARCH REPORT

**Application Number**

EP 25 18 9502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN SHAOLE ET AL: "The formation of ultrafine polyamide 6 nanofiber membranes with needleless electrospinning for air filtration", POLYMERS FOR ADVANCED TECHNOLOGIES, vol. 30, no. 7, 3 April 2019 (2019-04-03), pages 1635-1643, XP093343070, GB ISSN: 1042-7147, DOI: 10.1002/pat.4594 Retrieved from the Internet: URL:https://onlinelibrary.wiley.com/doi/full-xml/10.1002/pat.4594> * section "experimental procedure" * ----- | 1-14 | INV. B01D71/56 B01D71/80 |
| A | SARWAR ZAHID ET AL: "Fabrication and characterization of PEBA fibers by melt and solution electrospinning", JOURNAL OF MATERIALS RESEARCH AND TECHNOLOGY, vol. 8, no. 6, 1 November 2019 (2019-11-01), pages 6074-6085, XP093343423, BR ISSN: 2238-7854, DOI: 10.1016/j.jmrt.2019.10.001 * chapter 2.2 * ----- -/-- | 1-14 | TECHNICAL FIELDS SEARCHED (IPC) B01D |

The present search report has been drawn up for all claims

| Place of search | Date of completion of the search | Examiner |
|---|---|---|
| Munich | 3 December 2025 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 18 9502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AYDIN-AYTEKIN DILA ET AL: "Fabrication and characterization of multifunctional nanoclay and TiO2 embedded polyamide electrospun nanofibers and their applications at indoor air filtration", MATERIALS SCIENCE AND ENGINEERING: B, ELSEVIER, AMSTERDAM, NL, vol. 279, 4 March 2022 (2022-03-04), XP087000832, ISSN: 0921-5107, DOI: 10.1016/J.MSEB.2022.115675 [retrieved on 2022-03-04] * section "experimental" * | 1-14 | |
| A | BUIVYDIENE DALIA ET AL: "Formation and characterisation of air filter material printed by melt electrospinning", JOURNAL OF AEROSOL SCIENCE, vol. 131, 14 March 2019 (2019-03-14), pages 48-63, XP085642237, ISSN: 0021-8502, DOI: 10.1016/J.JAEROSCI.2019.03.003 * chapter 2.2 * | 1-14 | **TECHNICAL FIELDS SEARCHED (IPC)** |

The present search report has been drawn up for all claims

| Place of search | Date of completion of the search | Examiner |
|---|---|---|
| Munich | 3 December 2025 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)